# EUROPEAN PATENT SPECIFICATION

(11) **EP 2 055 407 B1**
(45) Date of publication and mention of the grant of the patent: **20.04.2011**
(21) Application number: 08253533.7
(22) Date of filing: 29.10.2008
(51) Int. Cl.: B21D 43/09

(54) **Sheet material feeding apparatus**
Plattenmaterialzuführvorrichtung
Appareil d'alimentation de matériaux en feuilles

(30) Priority: 31.10.2007 JP 2007283409
(43) Date of publication of application: 06.05.2009
(73) Proprietor: Sankyo Seisakusho Co., Tokyo (JP)
(72) Inventor: Kato, Heizaburo, Kikugawa-shi, Shizuoka (JP)
(74) Representative: Jackson, Martin Peter

(56) References cited:
- GB-A- 843 799

## Description

### Background of the Invention

The present invention relates to a sheet material feeding apparatus that intermittently feeds a sheet material a predetermined quantity by a predetermined quantity to a work machine such as a press apparatus, etc., and more particularly, to a sheet material feeding apparatus suited to feeding of a thin sheet material.

A new technology, such as development of hybrid cars in auto industry, etc., associated with the global environmental problem and products employing the technology are actively developed in respective industries. The hybrid technology of automobiles is based on the combination of an engine and a motor and one of themes of the technology resides in developing a further efficient motor. While motor cores used in such motors are manufactured by laminating thin sheets, which are punched by a press apparatus, in several layers, it has been found that with a view to an improvement in efficiency, it is preferable to make thin sheets, which are laminated, further thin.

In such situation, there is a tendency that a sheet material for motor cores punched by a press apparatus becomes thin yearly, and by way of example, a silicon steel plate having a thickness of 0.25 mm is used in recent years in place of a silicon steel plate having a thickness of 0.5 mm and used before. Accordingly, press apparatuses conformed to such situation have been studied and so sheet material feeding apparatuses that feed a sheet material to a press apparatus are demanded of development that suits the apparatuses to feeding of a thin sheet material.

Conventionally, a roll feed apparatus, in which a pair of rolls interpose and convey a material, is known as a sheet material feeding apparatus.

Some roll feed apparatuses are of a type comprising a main roll continuously and rotationally driven by a drive device and a sub-roll driven by the main roll through a sheet material (see, for example, United States Patent No. 5,720,421).

Also, some roll feed apparatuses are of a type, in which sector-shaped rolls are used as a pair of rolls and a material is conveyed by swinging and rotationally driving the rolls (see, for example, JP-U-63-170039).

Also, there is known a sheet material feeding apparatus comprising sheet material guide means that guides a sheet material to restrict flexure of the sheet material at the time of sheet material feeding and using the sheet material guide means to guide the sheet material upstream and downstream of a pair of rolls as viewed in a sheet-material conveyance direction (see, for example, JP-U-63-170039).

Since the sheet material feeding apparatus described above intermittently feeds a sheet material to a work machine such as a press apparatus, etc. while repeating stoppage and feeding, flexure of the sheet material is liable to generate in the intermediate of a path, along which the sheet material is fed to the work machine. Also, since a pair of rolls interpose therebetween the sheet material with a sufficient interposing force to feed the same with a friction force, the sheet material in case of a thin sheet is liable to readily wind round a roll. Such flexure of and winding of the sheet material round a roll leads to degradation in accuracy for a feeding length by the sheet material feeding apparatus to be responsible for a hindrance to the work by the work machine.

In the related art described in the JP-U-63-170039, the sheet material guide means performs guidance upstream and downstream of the pair of rolls as viewed in the sheet-material conveyance direction to restrict flexure of the sheet material but it is difficult to prevent flexure of and winding of the sheet material round a roll since a wide space is provided between the sheet material guide means and the rolls.

GB 843,799 discloses a sheet material feeding apparatus in accordance with the pre-characterising section of claim 1.

### Summary of the Invention

It is an object of the invention to provide a sheet material feeding apparatus that dissolves the problem described above and can smoothly feed a sheet material to a work machine without the generation of flexure of and winding of the sheet material round a roll.

In order to solve the problem described above, the present invention provides a sheet material feeding apparatus comprising a pair of rolls that cooperate with each other to interpose therebetween and convey a sheet material, and a sheet material guide device including a first guide member and a second guide member, which extend along a sheet material conveyance path, and configured to pass a sheet material between the guide members, wherein one of the pair of rolls has a circumferential groove arranged between both axial ends of a sheet material feeding surface, and the first guide member includes a guide portion passing through the circumferential groove and extending continuously to a downstream side from an upstream side between the pair of rolls in a sheet-material conveyance direction,
characterized in that the one of the pair of rolls has a plurality of said circumferential groove which are spaced from one another in the axial direction and the first guide member includes a plurality of said guide portion passing through the plurality of circumferential grooves, and in that the pair of rolls comprise a main roll driven by a drive device and a sub-roll driven through a sheet material by the main roll, the sub-roll constitutes said one of the pair of rolls and includes a roll shaft, both ends of which are fixed to a housing of the sheet material feeding apparatus, and a plurality of bearing members mounted in positions spaced from one another in an axial direction of the roll shaft, outer peripheral surfaces of outer rings of the respective bearing members define a sheet material feeding surface of the one of the pair of rolls, and each of the plurality of circumferential grooves is formed in a position between the respective bearing members.

In the invention, the guide portions of the first guide member pass through the plurality of circumferential grooves and extend continuously to a downstream side from an upstream side between the pair of rolls in a sheet-material conveyance direction, and the guide portions guide a sheet material when the sheet material passes between the pair of rolls.

Accordingly, even when a sheet material is thin, flexure of and winding of the sheet material round a roll are hard to generate and it is possible to smoothly feed the sheet material with high accuracy.

A construction is preferable, in which the other of the pair of rolls, which cooperates with the one of the pair of rolls, has a plurality of circumferential grooves arranged between both ends of a sheet material feeding surface in an axial direction and spaced from one another in the axial direction, the second guide member includes guide portions passing through the plurality of circumferential grooves on the other of the pair of rolls and extending continuously to a downstream side from an upstream side in a sheet-material conveyance direction, and the guide portions of the first guide member and the guide portions of the second guide member are arranged in opposition to each other to permit a sheet material to pass between the guide portions and the guide portions. With such construction, the guide portions of the first guide member and the guide portions of the second guide member guide a sheet material, so that stable feeding of a sheet material is made possible.

### Brief Description of the Drawings

Fig. 1 is an axial, cross sectional view showing a sheet material feeding apparatus according to Example 1 which falls outside of the invention;
Fig. 2 is a cross sectional view as viewed in an arrow direction II-II in Fig. 1;
Figs. 3A and 3B are views illustrating meritorious effects produced when a first guide member according to Example 2 (which falls outside the invention) is used;
Fig. 4 is a view showing the construction of a pair of rolls and first and second guide members according to Example 2;
Fig. 5 is a cross sectional view taken along the line V-V in Fig. 4;
Fig. 6 is a view showing the construction of a sub-roll and a first guide member according to the Embodiment;
Fig. 7 is a view showing the construction of a sub-roll and a first guide member according to Example 3 which falls outside the invention; and
Fig. 8 is a view showing the construction of the related art and being the same as Fig. 5.

### Description of the Preferred Embodiments

### (Example 1)

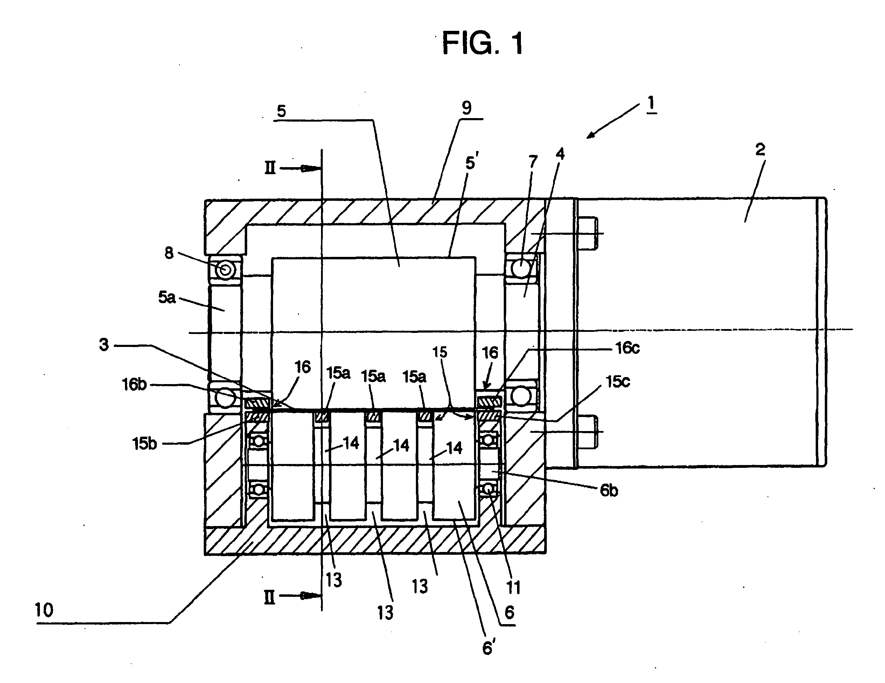

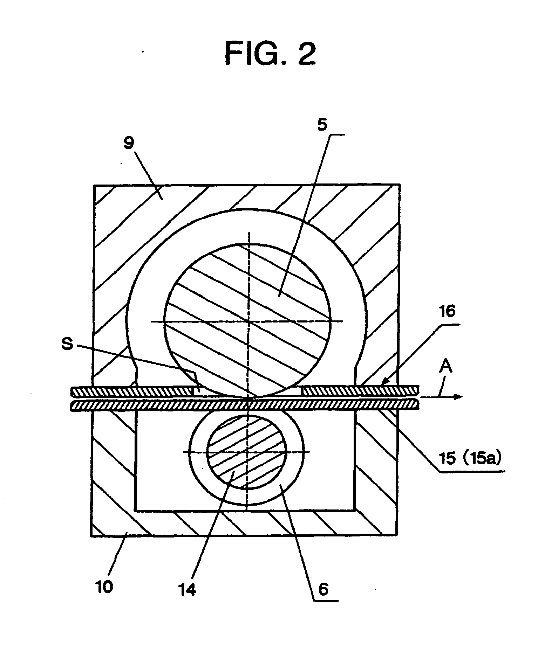

A sheet material feeding apparatus 1, according to Embodiment 1, shown in Figs. 1 and 2 comprises a pair of rolls, that is, an upper, main roll 5 driven by a drive device 2 such as servomotor or the like, a lower, sub-roll 6 driven through a sheet material 3 by the main roll 5, and sheet material guide means described later in detail.

A housing that accommodates therein the main roll 5 and the sub-roll 6 includes a first housing portion 9 having a wall portion that supports the main roll 5, and a second housing portion 10 mounted to the first housing portion 9 to support the sub-roll 6. One end 5b of the main roll 5 is connected to a driving shaft 4 of the drive device 2, the driving shaft 4 being supported rotatably on the first housing portion 9 with a bearing member 7 therebetween. The other end 5a of the main roll 5 is supported rotatably on the first housing portion 9 with a bearing member 8 therebetween. Both ends 6a, 6b of the sub-roll 6, respectively, are supported rotatably on the second housing portion 10 with bearing members 11, 12 therebetween.

The sheet material feeding apparatus 1 is fixed to a work machine (not shown) such as a press apparatus, etc. and the drive device 2 intermittently rotates the main roll 5 to convey the sheet material 3 interposed by the main roll 5 and the sub-roll 6 to feed the same a predetermined quantity by a predetermined quantity to the work machine.

In addition, a sheet material feeding apparatus of a type, in which a pair of rolls interpose and convey a sheet material, is usually provided with a mechanism that operates in synchronism with the operation of a press apparatus to release an interposing force, applied to the sheet material by the pair of rolls, just before press working, and a mechanism that adjusts a clearance between the pair of rolls according to the thickness of the sheet material. It suffices to appropriately adopt a known construction for these mechanisms.

The sheet material guide means or device includes a first guide member 15 and a second guide member 16, which are fixed to the housing portions 9, 10.

The second guide member 16 includes a portion positioned upstream of the both rolls 5, 6 as seen in a sheet-material conveyance direction indicated by an arrow A in Fig. 2 and a portion positioned downstream thereof and a space S is formed between these portions and the main roll 5. As shown in Fig. 1, the both ends 5a, 5b of the main roll 5 are formed to have a smaller diameter than that of an outer peripheral surface, that is, a sheet material feeding surface 5' that engages with the sheet material 3 to feed the same, and the second guide member 16 includes guide portions 16b, 16c passing through positions adjacent to peripheral surfaces of the both ends 5a, 5b and extending continuously to a downstream side of the both rolls 5, 6 from an upstream side thereof in the sheet-material conveyance direction.

Provided on an outer peripheral surface of the sub-roll 6, that is, a sheet material feeding surface 6' that engages with the sheet material 3 to feed the same are a plurality of circumferential grooves 13 spaced from one another in an axial direction of the sheet material feeding surface, small-diameter portions 14 of the sheet material feeding surface 6' being provided in locations, in which the circumferential grooves 13 are provided.

The first guide member 15 includes guide portions 15a passing through the respective circumferential grooves 13 and extending continuously to a downstream side from an upstream side between the both rolls 5, 6 in the sheet-material conveyance direction. Also, the first guide member 15 includes guide portions 15b, 15c positioned in the vicinity of the both ends 6a, 6b of the sub-roll 6. The guide portions 15a, 15b are fixed to a wall portion of the second housing portion 10 that supports the both ends 6a, 6b of the sub-roll 6 with the bearing members 11, 12 therebetween, the guide portions extending continuously to a downstream side of the both rolls 5, 6 from an upstream side thereof in the sheet-material conveyance direction and opposing to the guide portions 16b, 16c of the second guide member 16 to permit the sheet material 3 to pass between the guide portions 15a, 15b and the guide portions 16a, 16b.

The plurality of guide portions 15a, 15b, 15c, respectively, may comprise separate members fixed to the housing portions 9, 10 and may be connected integrally in positions upstream and downstream of the both rolls 5, 6.

As described above, according to Example 1, since the first guide member 15 having the guide portions 15a is provided, it is possible to preferably guide and smoothly feed the sheet material 3 without the generation of flexure and bending on the sheet material 3.

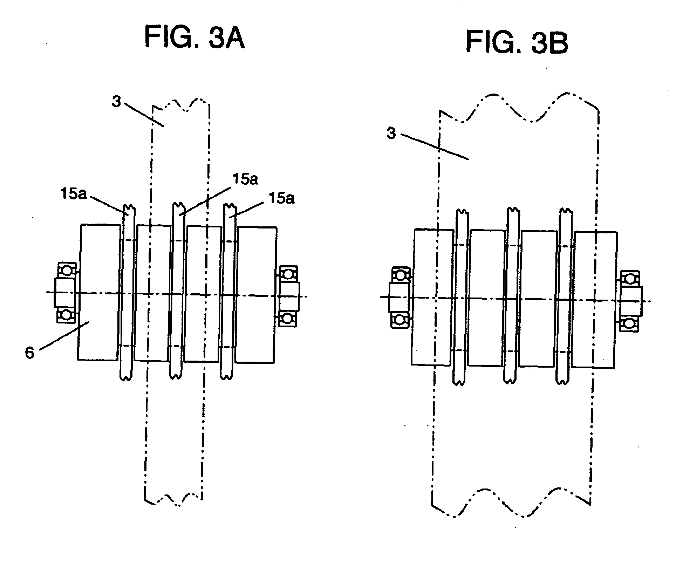

According to Example 1, since the first guide member 15 includes three guide portions 15a, it is possible to smoothly feed sheet materials of various widths. That is, when a sheet material 3 has a small width as shown in Fig. 3A, at least one guide portion 15a guides a sheet material, and when a sheet material 3 has a large width as shown in Fig. 3B, a plurality of guide portions 15a guide a sheet material to enable smoothly feeding the sheet material.

In addition, while the circumferential grooves 13 and the guide portions 15a are provided in plural in order to smoothly feed sheet materials of various widths, it suffices to appropriately select the specific number thereof according to a width of a sheet material being conveyed. Also, it does not matter whether the guide portions 15b, 15c, 16b, 16c positioned at ends of the both rolls 5, 6 are omitted according to a situation. This is the same in the Embodiment and Examples 2 and 3.

### Example 2

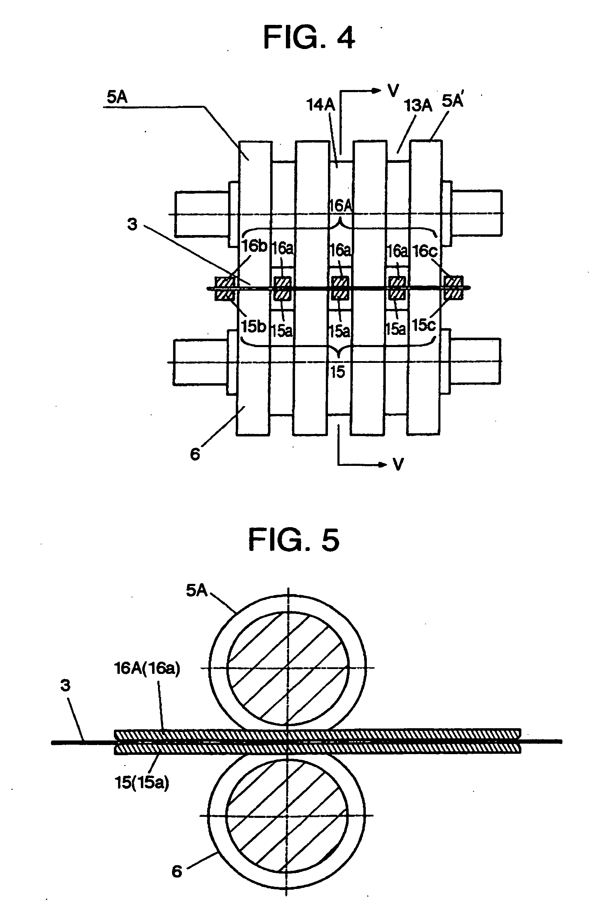

Example 2 shown in Fig. 4 comprises a sub-roll 6 and a first guide member 15, which are the same as those in Example 1, the first guide member 15 having guide portions 15a to 15c being the same as those in Example 1.

In Example 2, a main roll 5A and a second guide member 16A are structured in the same manner as the sub-roll 6 and the first guide member 15 are.

That is, a sheet material feeding surface 5A' of the main roll 5A is provided with a plurality of circumferential grooves 13A, which are spaced from one another in an axial direction of a sheet material feeding surface, and small-diameter portions 14A of the main roll 5A are provided in locations, in which the circumferential grooves are provided. The second guide member 16A includes guide portions 16a passing through the respective, circumferential grooves 13A and extending continuously to a downstream side from an upstream side in a sheet-material conveyance direction, and guide portions 16b, 16c being the same as the guide portions 16b, 16c in Example 1. The guide portions 16a to 16c are arranged in opposition to the guide portions 15a to 15c of the first guide member 15 to permit a sheet material 3 to pass between the guide portions 15a to 15c and the guide portions 16a to 16c.

As apparent from Figs. 4 and 5, according to Example 2, the guide portions 15a to 15c of the first guide member 15 and the guide portions 16a to 16c of the second guide member 16A regulate both surfaces of a sheet material passing between the both rolls to enable stably feeding the sheet material.

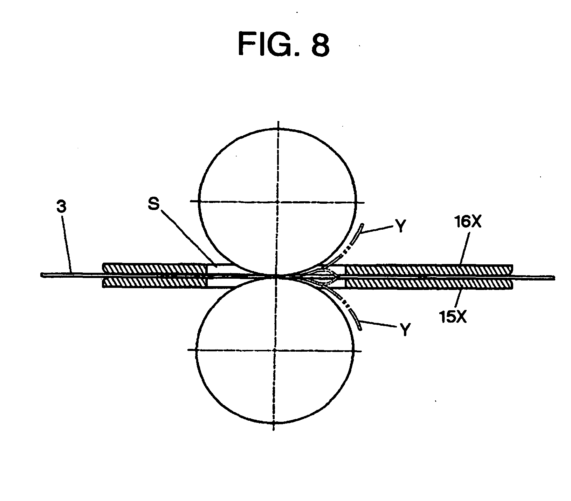

In contrast, in a related art shown in Fig. 8, guide members 15X, 16X do not include any guide portions extending continuously to a downstream side from an upstream side between a pair of rolls in a sheet-material conveyance direction and a space S is formed between the guide members 15X, 16X and the pair of rolls, so that flexure of and winding Y of a sheet material 3 around a roll are brought about.

### Embodiment

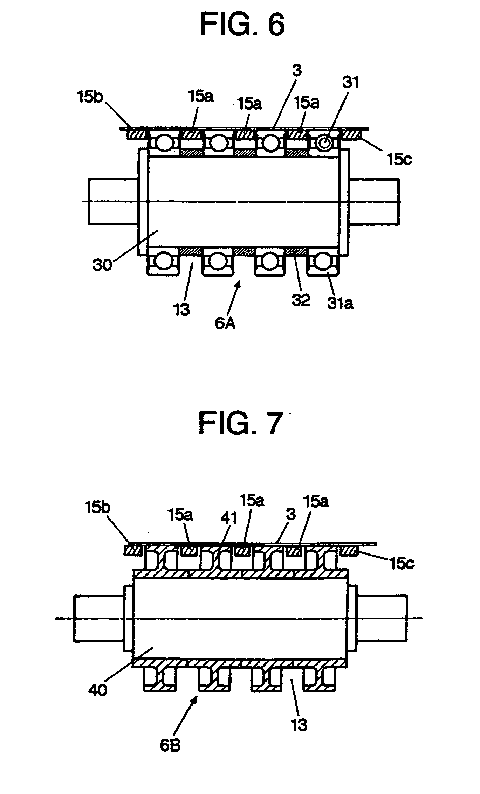

In an Embodiment of the invention shown in Fig. 6, a sub-roll 6A includes a roll shaft 30, both ends of which are fixed to a housing of a sheet material feeding apparatus, and a plurality of bearing members 31 mounted in positions spaced from one another in an axial direction of the roll shaft 30. Spacers 32 are provided between the respective bearing members 31. Preferably, deep groove bearings are used for the bearing members 31.

Outer peripheral surfaces of outer rings 31a of the respective bearing members 31 define sheet material feeding surfaces. Also, a plurality of circumferential grooves 13 are formed in positions between the respective bearing members 31 and guide portions 15a are provided to pass through the respective circumferential grooves 13 and extend continuously to a downstream side from an upstream side in a sheet-material conveyance direction. Guide portions 15b, 15c shown in Fig. 6 are the same as the guide portions 15b, 15c in examples 1 and 2.

According to the Embodiment, it is not necessary to mount the roll shaft 30 rotatably to a housing. That is, the sub-roll 6A is not rotated as a whole together with the roll shaft 30 but the outer rings 31a of the respective bearing members 31 are rotated through a sheet material 3 by a main roll, so that a small force can give rise to rotation without the generation of a large inertial force. Accordingly, it is possible to make the construction simple and to further smoothly feed a material.

### Example 3

In Example 3 shown in Fig. 7, a sub-roll 6B includes a roll shaft 40 and a plurality of roll members 41 mounted to the roll shaft 40 in a mutually adjoining relationship in an axial direction of the roll shaft 40. A plurality of circumferential grooves 13 are formed in positions between the respective roll members 41 and guide portions 15a are provided to pass through the respective circumferential grooves 13 and extend continuously to a downstream side from an upstream side in a direction, in which a sheet material 3 is conveyed. The reference numerals 15b, 15c in Fig. 7 denote guide portions being the same as the guide portions 15b, 15c in the Embodiment and Examples 1 and 2.

Generally, when a sheet material being conveyed is large in width, a roll becomes large in size and also in length, and a troublesome work is needed to accurately finish a sheet material feeding surface of such large and lengthy roll. With a construction, in which the plurality of roll members 41 are provided as in Example 3, finishing can be performed readily and accurately by subjecting all the roll members 41 to finishing at a time in a state, in which the roll members 41 are mounted to the roll shaft 40.

Also, when the construction of Example 3 is adopted, a sub-roll can be made light in weight or the like by contriving the shape of the respective roll members 41.

The structure of the roll, according to Embodiment 3, shown in Fig. 6 cannot be adopted as the structure of a main roll but the structure of the roll, according to Example 3, shown in Fig. 7 can be adopted as the structure of a main roll. Also, the structures of the roll shown in Fig. 4, can be used for the structure of a main roll. For example, it is possible to adopt the structure of the roll shown in Fig. 7 for the structure of a main roll for cooperation with a sub-roll, which has the structure shown in Fig. 6.

## Claims

1. A sheet material feeding apparatus comprising a pair of rolls (5, 6; 5A; 6A; 6B) that cooperate with each other to interpose therebetween and convey a sheet material (3), and a sheet material guide device (15, 16; 16A) including a first guide member (15) and a second guide member (16; 16A), which extend along a sheet material conveyance path, and configured to pass a sheet material between the guide members, wherein one (6; 6A; 6B) of the pair of rolls has a circumferential groove (13) arranged between both axial ends of a sheet material feeding surface, and the first guide member (15) includes a guide portion passing through the circumferential groove and extending continuously to a downstream side from an upstream side between the pair of rolls in a sheet-material conveyance direction,
**characterized in that** the one of the pair of rolls has a plurality of said circumferential groove (13) which are spaced from one another in the axial direction and the first guide member (15) includes a plurality of said guide portion passing through the plurality of circumferential grooves, and **in that** the pair of rolls comprise a main roll (5, 5A) driven by a drive device (2) and a sub-roll (6A) driven through a sheet material by the main roll, the sub-roll (6A) constitutes said one of the pair of rolls and includes a roll shaft (30), both ends of which are fixed to a housing of the sheet material feeding apparatus (1), and a plurality of bearing members (31) mounted in positions spaced from one another in an axial direction of the roll shaft, outer peripheral surfaces of outer rings (31a) of the respective bearing members define a sheet material feeding surface of the one of the pair of rolls, and each of the plurality of circumferential grooves (13) is formed in a position between the respective bearing members.

2. The sheet material feeding apparatus according to claim 1, **characterized in that** the main roll (5,5a) of the pair of rolls includes a roll shaft (40) and a plurality of roll members (41) mounted to the roll shaft in a mutually adjoining relationship in an axial direction of the roll shaft, and each of a plurality of circumferential grooves (13) is formed in a position between the respective roll members.

3. The sheet material feeding apparatus according to claim 1 or 2, **characterized in that** the main roll (5A) of the pair of rolls, which cooperates with the sub-roll (6; 6A; 6B) of the pair of rolls, has a plurality of circumferential grooves (13A) arranged between both axial ends of a sheet material feeding surface and spaced from one another in the axial direction, the second guide member (16A) includes guide portions passing through the plurality of circumferential grooves on the other of the pair of rolls and extending continuously to a downstream side from an upstream side in a sheet-material conveyance direction, and the guide portions of the first guide member (15) and the guide portions of the second guide member (16A) are arranged in opposition to each other to permit a sheet material to pass between the guide portions of the first guide member and the guide portions of the second guide member.

## Patentansprüche

1. Plattenmaterialzuführungsvorrichtung umfassend ein Paar von Rollen (5, 6; 5A; 6A; 6B), welche miteinander zusammenarbeiten, um dazwischen ein Plattenmaterial (3) anzuordnen und zu befördern, und eine Plattenmaterialführungsvorrichtung (15, 16; 16A), welche ein erstes Führungselement (15) und ein zweites Führungselement (16; 16A) aufweist, welche sich entlang eines Plattenmaterialbeförderungspfades erstrecken, und welche ausgestaltet ist, ein Plattenmaterial zwischen den Führungselementen zu führen, wobei eine (6; 6A; 6B) von dem Paar von Rollen eine Umfangsnut (13) aufweist, welche zwischen beiden axialen Enden einer Plattenmaterialzuführungsfläche angeordnet ist, und wobei das erste Führungselement (15) einen Führungsabschnitt aufweist, welcher durch die Umfangsnut verläuft und sich kontinuierlich von einer vorgelagerten Seite zu einer nachgelagerten Seite zwischen dem Paar von Rollen in einer Plattenmaterialbeförderungsrichtung erstreckt,
**dadurch gekennzeichnet, dass** die eine von dem Paar von Rollen mehrere von den Umfangsnuten (13) aufweist, welche beabstandet voneinander in der axialen Richtung angeordnet sind, und dass das erste Führungselement (15) mehrere von den Führungsabschnitten aufweist, welche durch die mehreren Umfangsnuten verlaufen, und dass das Paar von Rollen eine Hauptrolle (5, 5A), welche von einer Antriebsvorrichtung (2) angetrieben wird, und eine Hilfsrolle (6A), welche durch ein Plattenmaterial von der Hauptrolle angetrieben wird, wobei die Hilfsrolle (6A) die eine von dem Paar von Rollen bildet und einen Rollenschaft (30) aufweist, von welchem beide Enden an einem Gehäuse der Plattenmaterialzuführungsvorrichtung (1) befestigt sind, und mehrere Lagerelemente (31) umfasst, welche in voneinander beabstandeten Positionen in einer axialen Richtung des Rollenschafts angebracht sind, wobei Umfangsflächen von Außenringen (31a) der entsprechenden Lagerelemente eine Plattenmaterialzuführungsfläche von der einen von dem Paar von Rollen definieren, und wobei jede von den mehreren Umfangsnuten (13) in einer Position zwischen den entsprechenden Lagerelementen ausgebildet ist.

2. Plattenmaterialzuführungsvorrichtung nach Anspruch 1, **dadurch gekennzeichnet, dass** die Hauptrolle (5, 5a) des Paars von Rollen einen Rollenschaft (40) und mehrere Rollenelemente (41) aufweist, welche an dem Rollenschaft in einer gegenseitig angrenzenden Beziehung in einer axialen Richtung des Rollenschafts angebracht sind, und dass jede von mehreren Umfangsnuten (13) in einer Position zwischen den entsprechenden Rollenelementen ausgebildet ist.

3. Plattenmaterialzuführungsvorrichtung nach Anspruch 1 oder 2, **dadurch gekennzeichnet, dass** die Hauptrolle (5A) des Paars von Rollen, welche mit der Hilfsrolle (6; 6A; 6B) von dem Paar von Rollen zusammenarbeitet, mehrere Umfangsnuten (13A) aufweist, welche zwischen beiden axialen Enden einer Plattenmaterialzuführungsfläche und beabstandet voneinander in der axialen Richtung angeordnet sind, wobei das zweite Führungselement (16A) Führungsabschnitte aufweist, welche durch die mehreren Umfangsnuten an der anderen des Paars von Rollen verlaufen und sich kontinuierlich von einer vorgelagerten Seite zu einer nachgelagerten Seite in einer Plattenmaterialbeförderungsrichtung erstrecken, und wobei die Führungsabschnitte des ersten Führungselements (15) und die Führungsabschnitte des zweiten Führungselements (16A) zueinander gegenüber angeordnet sind, um einem Plattenmaterial zu ermöglichen, zwischen den Führungsabschnitten des ersten Führungselements und den Führungsabschnitten des zweiten Führungselements zu verlaufen.

## Revendications

1. Appareil d'alimentation en matériau en feuille, comprenant une paire de rouleaux (5, 6 ; 5A ; 6A ; 6B) qui coopèrent l'un avec l'autre pour interposer entre ceux-ci et transporter un matériau en feuille (3), et un dispositif de guidage de matériau en feuille (15, 16 ; 16A) comprenant un premier élément de guidage (15) et un second élément de guidage (16 ; 16A), qui s'étendent le long d'un trajet de transport de matériau en feuille, et configuré pour faire passer un matériau en feuille entre les éléments de guidage, dans lequel un premier (6 ; 6A ; 6B) de la paire de rouleaux comporte une rainure circonférentielle (13) agencée entre les deux extrémités axiales d'une surface d'alimentation en matériau en feuille, et le premier élément de guidage (15) comprend une partie de guidage passant à travers la rainure circonférentielle et s'étendant en continu jusqu'à un côté aval à partir d'un côté amont entre la paire de rouleaux dans une direction de transport de matériau en feuille,
**caractérisé en ce que** le premier de la paire de rouleaux comporte une pluralité de rainures circonférentielles (13) qui sont espacées les unes des autres dans la direction axiale, et le premier élément de guidage (15) comprend une pluralité de parties de guidage, passant à travers la pluralité de rainures circonférentielle, et **en ce que** la paire de rouleaux comprend un rouleau principal (5, 5A) entraîné par un dispositif d'entraînement (2) et un rouleau auxiliaire (6A) entraîné à travers un matériau en feuille par le rouleau principal, le rouleau auxiliaire (6A) constitue ledit premier de la paire de rouleaux et comprend un axe de rouleau (30), dont les deux extrémités sont fixées à un logement de l'appareil d'alimentation en matériau en feuille (1), et une pluralité d'éléments de palier (31) disposés dans des positions espacées les unes des autres selon une direction axiale de l'axe de rouleau, des surfaces périphériques extérieures de bagues extérieures (31a) des éléments de palier respectifs définissent une surface d'alimentation en matériau en feuille du premier de la paire de rouleaux, et chacune de la pluralité de rainures circonférentielles (13) est formée dans une position entre les éléments de palier respectifs.

2. Appareil d'alimentation en matériau en feuille selon la revendication 1, **caractérisé en ce que** le rouleau principal (5, 5A) de la paire de rouleaux comprend un axe de rouleau (40) et une pluralité d'éléments de rouleau (41) montés sur l'axe de rouleau dans une relation mutuellement contiguë selon une direction axiale de l'axe de rouleau, et chacune de la pluralité des rainures circonférentielles (13) est formée dans une position entre les éléments de rouleau respectifs.

3. Appareil d'alimentation en matériau en feuille selon la revendication 1 ou 2, **caractérisé en ce que** le rouleau principal (5A) de la paire de rouleaux, qui coopère avec le rouleau auxiliaire (6 ; 6A ; 6B) de la paire de rouleaux, comporte une pluralité de rainures circonférentielles (13A) agencées entre les deux extrémités axiales d'une surface d'alimentation en matériau en feuille et espacées les unes des autres dans la direction axiale, le second élément de guidage (16A) comprend des parties de guidage passant à travers la pluralité de rainures circonférentielles sur l'autre de la paire de rouleaux et s'étendant en continu jusqu'à un côté aval à partir d'un côté amont dans une direction de transport de matériau en feuille, et les parties de guidage du premier élément de guidage (15) et les parties de guidage du second élément de guidage (16A) sont agencées en opposition les unes aux autres pour permettre à un matériau en feuille de passer entre les parties de guidage du premier élément de guidage et les parties de guidage du second élément de guidage.
